(19) Europäisches Patentamt
European Patent Office
Office européen des brevets

(11) **EP 4 265 358 A1**

(12) **DEMANDE DE BREVET EUROPEEN**

(43) Date de publication:
**25.10.2023 Bulletin 2023/43**

(21) Numéro de dépôt: **23169263.3**

(22) Date de dépôt: **21.04.2023**

(51) Classification Internationale des Brevets (IPC):
*B22F 10/28* (2021.01)  *B22F 3/11* (2006.01)
*B22F 5/10* (2006.01)  *B22F 10/36* (2021.01)
*B22F 10/38* (2021.01)  *F28F 21/08* (2006.01)
*F28D 15/04* (2006.01)  *B33Y 10/00* (2015.01)
*B33Y 50/02* (2015.01)  *B33Y 80/00* (2015.01)
*F28F 13/00* (2006.01)

(52) Classification Coopérative des Brevets (CPC):
(C-Sets disponibles)
**B22F 10/28; B22F 3/1103; B22F 5/10; B22F 10/36;
B22F 10/38; B33Y 10/00; B33Y 50/02; B33Y 80/00;
F28D 15/046; F28F 13/003;** B22F 2999/00;
F28F 21/08                                    (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **22.04.2022  FR 2203754**

(71) Demandeur: **Commissariat à l'énergie atomique
et aux énergies alternatives
75015 Paris (FR)**

(72) Inventeurs:
• **STEPHAN, Maxime
  38054 Grenoble cedex 09 (FR)**
• **BAFFIE, Thierry
  38054 Grenoble cedex 09 (FR)**
• **GARANDET, Jean-Paul
  38054 Grenoble cedex 09 (FR)**

(74) Mandataire: **Cabinet Nony
11 rue Saint-Georges
75009 Paris (FR)**

(54) **PROCÉDÉ DE FABRICATION D'UNE PIÈCE POREUSE PAR FUSION LASER SUR LIT DE POUDRE**

(57)    Procédé de fabrication additive d'une pièce poreuse (16), comprenant la répétition des étapes suivantes :
a) formation d'un lit (7) de particules métalliques (11) à partir d'une poudre (3), le percentile dix ($D_{10}$) du diamètre équivalent des particules étant supérieur à 250 $\mu$m,
b) liaison des particules entre elles par balayage d'au moins une portion (9) du lit avec un faisceau laser (8) selon un trajet suivant un premier motif (10) puis un deuxième motif (13), chacun formés de lignes (101, 131) parallèles et écartées les unes des autres, les premier et deuxième motifs étant entrelacés ou identiques,
le faisceau laser présentant un diamètre ($\phi$) inférieur au diamètre équivalent médian ($D_{50}$) de la poudre, les rapports des écarts-vecteurs (H, H') des premier et deuxième motifs sur le diamètre équivalent médian de la poudre étant chacun compris entre 0,5 et 3,0.

[Fig 5]

**FIG. 5**

**(Cont. page suivante)**

(52) Classification Coopérative des Brevets (CPC):
(Cont.)

C-Sets
B22F 2999/00, B22F 10/36, B22F 10/366,
B22F 1/05, B22F 10/34

**Description**

**Domaine technique**

L'invention concerne le domaine technique de la fabrication de pièces poreuses pour le transport d'un fluide, en particulier de la fabrication d'échangeurs de chaleur ou de réacteurs permettant la mise en oeuvre de réactions chimique à structure poreuse, notamment de caloducs à structure poreuse.

**Technique antérieure**

Un caloduc est un dispositif thermique destiné à transférer un flux d'énergie thermique d'une source chaude vers une source froide, en mettant à profit les changements de phase successifs liquide/gaz et gaz/liquide d'un fluide d'échange qui circule au sein du caloduc. Le fluide d'échange à l'état gazeux, contenant l'énergie thermique échangée avec la source chaude, est transporté dans le caloduc depuis un évaporateur vers un condenseur. Il est ainsi condensé au contact de la source froide. Sous forme liquide, il est alors transporté en sens inverse du condenseur vers l'évaporateur, au moins en partie sous l'effet des forces capillaires induites par le contact du fluide d'échange avec la structure poreuse.
Pour que l'échange de chaleur, et optionnellement la réaction chimique, s'opèrent de façon optimale, il est nécessaire que la structure poreuse présente à la fois une surface d'échange avec le fluide et une perméabilité au fluide élevées. Une haute perméabilité, généralement associée à une taille de pores élevée, facilite la circulation du fluide à travers la structure poreuse, mais ne favorise pas a priori les échanges de chaleur, tandis qu'une grande surface d'échange rend plus efficace le transfert thermique entre le fluide et la structure poreuse et/ou augmente le nombre de sites où la réaction chimique peut s'opérer, mais au détriment de la facilité d'écoulement du fluide. La surface d'échange avec le fluide et la perméabilité au fluide sont donc de prime abord antagonistes.
Différents procédés de fabrication de structure poreuse à perméabilité et surface d'échange contrôlées sont connus, par exemple par tissage de fibres métalliques, par extrusion, par frittage de particules métalliques. Toutefois, ces procédés imposent de nombreuses limitations géométriques pour les pièces fabriquées et/ou ne sont pas adaptés pour la fabrication de pièce avec des gradients de porosité. En outre, dans le cas du frittage, les durées de maintien en températures pour lier les particules des poudres sont généralement élevées et donc peu compatibles avec les impératifs industriels de rendement de production élevé.
En ce qui concerne les caloducs, lorsque que le condenseur est situé plus bas selon la gravité que l'évaporateur, il y a une compétition entre les forces capillaires et les forces gravitaire et de viscosité liée au frottement du fluide contre les parois du caloduc. Le retour du liquide du condenseur vers l'évaporateur ne peut donc s'opérer que si les forces capillaires sont supérieures aux forces gravitaire et visqueuse. Lorsque le condenseur est situé plus haut selon la gravité que l'évaporateur, la force gravitaire contribue au pompage du fluide. Dans une application sans gravité, seules les forces capillaires entraînent le pompage du fluide depuis le condenseur vers l'évaporateur. Il est connu que la circulation du fluide d'échange par effet capillaire est optimale si la structure poreuse comporte des pores de taille inférieure à 200 $\mu$m, notamment dans la portion du caloduc au contact de l'évaporateur.
Afin de promouvoir l'effet des forces capillaires, la production de caloducs par fabrication additive sur lit de poudres a été proposée pour contrôler la taille de pores de la structure poreuse, et ainsi la perméabilité et la surface d'échange. Par exemple, l'article D. Jafari et al., Applied Thermal Engineering, vol. 143, 2018, pages 403-314, doi:10.1016/j.applthermaleng.2018.07.111 et l'article M. Ameli et al., Applied Thermal Engineering, vol. 52, 2013, pages 498-504, doi:10.1016/j.applthermaleng.2012.12.011 décrivent des structures poreuses sous la forme de treillis. Les treillis comportent des barreaux denses formant les côtés d'un polyèdre et qui définissent des pores cellulaires. Ils sont formés par la fusion successive, par irradiation localisée au moyen d'un faisceau laser, de couches de particules métalliques au cours de la fabrication additive. La perméabilité de ces treillis peut être contrôlée en modifiant la longueur et le diamètre des barreaux. Cependant, il s'avère difficile, par ces techniques, de former des treillis ayant des pores de taille inférieure à 200 $\mu$m. Notamment, la diminution de la taille des pores s'accompagne d'une densification du treillis. Par ailleurs, les treillis élaborés par fabrication additive sur lits de poudres doivent être dépoudrés avant utilisation. Or, l'élimination des particules résiduelles d'un tel treillis est complexe à mettre en oeuvre en pratique.
La demande de brevet EP 3 279 597 A1 décrit un procédé de fabrication additive d'une pièce poreuse par mise en forme d'une poudre de particules ayant une taille allant de 10 $\mu$m à 250 $\mu$m.
La demande de brevet non publiée FR 2010978 décrit un procédé de fabrication d'une structure poreuse pour le transport d'un fluide, la fabrication comprenant la mise en forme par fabrication additive d'une poudre de particules dont le diamètre équivalent médian est supérieur à 100 $\mu$m.
Il existe donc un besoin pour un procédé de fabrication d'une structure poreuse pour le transport d'un fluide, en particulier destinée à former un échangeur de chaleur et/ou au contact de laquelle une réaction chimique peut s'effectuer par l'intermédiaire du fluide transporté. Il existe notamment un besoin pour un procédé de fabrication d'une structure poreuse avec une perméabilité contrôlée et tout en comportant des pores d'une faible taille, notamment inférieure à 200 µm.

Le but de l'invention est de répondre, au moins en partie, à ce besoin.

**Exposé de l'invention**

Pour ce faire, l'invention concerne un procédé de fabrication additive d'une pièce poreuse, le procédé comprenant la répétition d'un cycle comportant les étapes de :

a) formation d'un lit de particules métalliques à partir d'une poudre desdites particules, le percentile dix $D_{10}$ du diamètre équivalent des particules de la poudre étant supérieur à 250 µm,
b) liaison des particules entre elles par balayage d'au moins une portion du lit avec un faisceau laser selon un trajet suivant un premier motif puis un deuxième motif qui sont chacun formés de lignes parallèles et écartées les unes des autres, les premier et deuxième motifs étant entrelacés ou identiques,

le faisceau laser présentant un diamètre inférieur au diamètre équivalent médian $D_{50}$ de la poudre, le rapport de l'écart-vecteur du premier motif sur le diamètre équivalent médian de la poudre et le rapport de l'écart-vecteur du deuxième motif sur le diamètre équivalent médian de la poudre étant chacun compris entre 0,5 et 3,0.

Les procédés de fabrication additive de pièces poreuses connus mettent en oeuvre des poudres présentant un diamètre équivalent médian inférieur à 100 µm, et même plus généralement inférieur à 50 µm. C'est le cas par exemple pour la production de treillis à pores cellulaires décrits précédemment. Il est connu de l'homme du métier que la force motrice pour la coalescence de particules voisines lors du balayage laser dépend de la courbure desdites particules en leur point de contact, que des particules de faible diamètre présentent des courbures plus faibles en leur point de contact que des particules de plus grand diamètre, et donc, que la coalescence de particules voisines lors d'un balayage laser est plus facile pour des particules de faible diamètre. La mise en oeuvre, selon l'invention, d'une poudre de particules métallique ayant un $D_{10}$ supérieur à 250 µm pour la fabrication additive n'est donc ni usuelle ni intuitive pour l'homme du métier.

Par ailleurs, le procédé selon l'invention ne nécessite pas la génération d'un fichier informatique contenant la géométrie d'un treillis et le trajet complexe du faisceau laser, couche par couche, pour produire le treillis. Il est donc de mise en oeuvre simple.

En outre, dans les procédés de l'art antérieur, le diamètre du faisceau laser est supérieur au diamètre équivalent médian de la poudre, assurant la fusion complète d'un nombre élevé de particules au passage du faisceau laser sur ces particules, et favorisant ainsi la formation d'une pièce dense. Selon l'invention, le balayage de manière non conventionnelle par le faisceau laser présentant un faible diamètre par rapport au $D_{10}$ de la poudre en suivant le premier motif et le deuxième motif permet avantageusement un compromis optimal entre diffusion et accumulation de la chaleur à l'échelle de la pièce pour créer des liaisons, aussi dénommées cous de liaison, entre les particules et assurer la formation d'une porosité entre les particules liées, favorable au transfert fluidique. En particulier, le balayage suivant les premier et deuxième motifs échauffent localement les particules balayées par le faisceau laser, ce qui induit une augmentation de la température moyenne de la portion du lit.

Le « diamètre équivalent médian », aussi dénommé $D_{50}$, d'une poudre de particules correspond à la médiane de la distribution granulométrique des diamètres équivalents des particules de la poudre. La distribution granulométrique des diamètres équivalents des particules d'une poudre peut être mesurée par granulométrie laser, par exemple avec un granulomètre Mastersizer 2000 commercialisé par la société Malvern Panalytical.

De préférence, la poudre présente un percentile quatre-vingt-dix $D_{90}$ du diamètre équivalent des particules de la poudre inférieur à 1200 µm, de préférence inférieur à 900 µm, de préférence inférieur à 600 µm.

La poudre peut présenter un diamètre équivalent médian $D_{50}$ compris entre 250 µm et 900 µm, de préférence entre 350 µm et 500 µm.

Le percentile N ($D_N$) du diamètre équivalent des particules d'une poudre est la valeur de ce diamètre équivalent correspondant aux pourcentages, en volume, de N % sur la courbe de distribution cumulée des diamètres équivalents des particules. Par exemple, 10 %, en volume, des particules de la poudre ont un diamètre équivalent inférieur à $D_{10}$ et 90 %, en volume, des particules ont un diamètre équivalent supérieur ou égal à $D_{10}$ ; 90 %, en volume, des particules de la poudre ont un diamètre équivalent inférieur à $D_{90}$ et 10 %, en volume, des particules ont un diamètre équivalent supérieur ou égal à $D_{90}$. Ainsi, le percentile cinquante $D_{50}$ correspond au diamètre équivalent médian de la distribution.

La poudre peut présenter un indice de dispersion $I_d$ inférieur à inférieur à 0,5, voire inférieur à 0,3, voire inférieur à 0,1.

L'indice de dispersion $I_d$ d'une poudre est le rapport de la différence entre le percentile quatre-vingt-dix $D_{90}$ et le percentile dix $D_{10}$ de la poudre, divisée par le diamètre équivalent médian $D_{50}$ de la poudre.

De préférence, au moins 80 %, de préférence au moins 90 %, de préférence au moins 95 %, mieux au moins 99 % des particules de la poudre présentent un facteur de forme supérieur à 0,6, préférentiellement supérieur à 0,9.

Le facteur de forme d'une particule est déterminé comme étant le rapport du plus petit diamètre sur le plus grand diamètre de la particule, mesurés sur un cliché représentant la particule et réalisé par microscopie optique à un grossissement fois 20.

De préférence, l'indice de sphéricité de la poudre est compris entre 0,7 et 1, préférentiellement entre 0,9 et 1.

L'indice de sphéricité d'une poudre peut être déterminé en mesurant les facteurs de forme de chaque particule d'un ensemble de particules de la poudre, puis en calculant la moyenne arithmétique des facteurs de forme ainsi mesurés. Pour que l'indice de sphéricité d'une poudre soit représentatif, l'ensemble de particules peut comporter plus de 30 000, de préférence plus de 80 000, particules. L'indice de sphéricité d'une poudre peut être mesuré sur un équipement Morphologie G3S commercialisé par la société Malvern Panalytical.

De préférence, les particules de la poudre sont obtenues par une technique d'atomisation au gaz ou une technique d'atomisation à l'eau. Dans le procédé d'atomisation à l'eau, la poudre obtenue est irrégulière ce qui rend la pièce fabriquée par le procédé selon l'invention davantage favorable à l'ascension de liquide par capillarité.

De préférence, les particules de la poudre comportent au moins un métal pour plus de 90,0 % de leur masse, de préférence plus de 95,0 % de leur masse, voire sont constituées uniquement de métal. De préférence, le métal est choisi parmi l'aluminium, le cuivre, le nickel, le fer et un alliage comportant plus de 50 % en masse d'un métal choisi parmi l'aluminium, le cuivre, le nickel et le fer, par exemple un acier inoxydable.

De préférence, le lit formé à l'étape a) a une épaisseur comprise entre 400 et 1400 $\mu$m.

De préférence, la formation du lit de particules comporte l'étalement d'une portion de la poudre par un rouleau. Avantageusement, le lit présente ainsi une épaisseur sensiblement constante et les particules qui le constituent sont réparties sensiblement uniformément sur sa surface.

A l'étape b), la liaison des particules entre elles peut être réalisée par fusion partielle et coalescence entre elles des particules de la poudre.

De préférence, le rapport du diamètre du faisceau laser sur le diamètre équivalent médian de la poudre est inférieur à 0,5, de préférence inférieur à 0,3, mieux inférieur à 0,2. L'énergie du faisceau laser est ainsi concentrée sur une zone d'une taille inférieure au diamètre médian des particules de la poudre, ce qui facilite la formation de liaisons entre les particules tout en maintenant une porosité entre les particules.

Les lignes des premier et deuxième motifs peuvent être curvilignes ou rectilignes. De préférence elles sont rectilignes, ce qui simplifie la mise en oeuvre du lasage, i.e. du balayage par le faisceau laser, de la portion du lit.

L' « écart-vecteur » d'un motif est la distance séparant deux lignes adjacentes balayées consécutivement par le faisceau laser, la distance étant mesurée perpendiculairement auxdites lignes.

De préférence, le rapport de l'écart-vecteur du premier motif sur le diamètre équivalent médian de la poudre et le rapport de l'écart-vecteur du deuxième motif sur le diamètre équivalent médian de la poudre sont chacun compris entre 0,6 et 2,0.

De préférence, l'écart-vecteur du premier motif est égal à l'écart-vecteur du deuxième motif.

De préférence, les premier et deuxième motifs sont entrelacés.

De préférence, chacune des lignes du deuxième motif est équidistante de deux lignes adjacentes du premier motif. Ainsi, l'énergie du laser est répartie uniformément vers chacune des lignes adjacentes du premier motif. Par exemple, le deuxième motif est obtenu par translation du premier motif le long d'un axe perpendiculaires aux lignes du premier motif.

De préférence, la ligne du premier motif et la ligne du deuxième motif qui sont balayées en premier par le faisceau laser sont adjacentes. De préférence, elles sont balayées par le faisceau laser selon un même sens de parcours.

Chacune des lignes du premier motif peut être balayée selon un même sens de parcours et/ou chacune des lignes du deuxième motif peut être balayée selon un même sens de parcours. En variante, chacune des lignes du premier motif peut être balayée selon un sens de parcours opposé au sens de parcours des lignes adjacentes du premier motif, et/ou chacune des lignes du deuxième motif peut être balayée selon un sens de parcours opposé au sens de parcours des lignes adjacentes du deuxième motif.

De préférence, notamment lorsque les particules sont faites d'un acier inoxydable, la densité d'énergie volumique apportée par le faisceau laser lors du balayage selon le premier motif et/ou selon la densité d'énergie volumique apportée par le faisceau laser lors du balayage selon le deuxième motif sont comprises entre 0,5 J/mm$^3$ et 3,0 J/mm$^3$.

Une telle densité d'énergie volumique résulte en une bonne liaison des particules du lit à la fois entre elles et, le cas échéant, avec l'ébauche de la pièce formée au cours des cycles précédents de la fabrication additive. En outre, elle permet d'éviter une densification excessive de la pièce et de contrôler la porosité interparticulaire dans la pièce convenant au transfert fluidique.

La densité d'énergie volumique est exprimée par la formule

[Math 1]

$$E = \frac{P}{V.H.e}$$

dans laquelle :

- *P* est la puissance du faisceau laser, exprimée en W,
- *V* est la vitesse de balayage du faisceau laser, exprimée en mm.s$^{-1}$,
- *H* est l'écart-vecteur, exprimé en mm et
- *e* est l'épaisseur du lit de particules métalliques en mm.

A l'étape b), de préférence, le temps de latence entre le début du balayage selon le premier motif et le début du balayage selon le deuxième motif est compris entre 0,1 et 3 s.

De préférence, postérieurement au balayage selon le deuxième motif, le procédé peut comporter un balayage de la portion du lit par un faisceau laser selon un trajet suivant un troisième motif puis un quatrième motif qui sont chacun formés de lignes sensiblement parallèles, écartées les unes des autres et formant un angle compris entre 60° et 120°, de préférence entre 75° et 105°, de préférence encore entre 85° et 95°, voire perpendiculaire, avec les lignes du premier motif, les troisième et quatrième motifs étant entrelacés ou identiques. Le balayage de la portion du lit selon les troisième et quatrième motifs augmente l'apport d'énergie sur l'ensemble de la portion du lit. La répartition de l'accumulation de chaleur qui en résulte permet d'aboutir à une pièce poreuse de résistance mécanique supérieure par rapport au cas où seul le balayage selon les premier et deuxième motifs est mis en oeuvre.

Les lignes des troisième et quatrième motifs peuvent être curvilignes ou, de préférence, rectilignes. Selon la variante où les lignes des troisième et quatrième motifs sont curvilignes, l'angle formé entre lesdites lignes avec les lignes du premier motif est l'angle formé par les tangentes desdites lignes aux points d'intersection avec les lignes du premier motif. Par exemple, le troisième motif, respectivement le quatrième motif, sont obtenus par rotation du premier motif, respectivement du deuxième motif, selon un axe normal au lit de particules.

De préférence, le rapport de l'écart-vecteur du troisième motif sur le diamètre équivalent médian de la poudre et le rapport de l'écart-vecteur du quatrième motif sur le diamètre équivalent médian de la poudre sont chacun compris entre 0,5 et 3,0, de préférence entre 0,6 et 2,0.

De préférence, la ligne du troisième motif et la ligne du quatrième motif qui sont balayées en premier par le faisceau laser sont adjacentes, de préférence encore, lesdites lignes sont balayées par le faisceau laser selon un même sens de parcours.

Chacune des lignes du troisième motif peut être balayée selon un même sens de parcours et/ou chacune des lignes du quatrième motif peut être balayée selon un même sens de parcours. En variante, chacune des lignes du troisième motif peut être balayée selon un sens de parcours opposé au sens de parcours des lignes adjacentes du troisième motif, et/ou chacune des lignes du quatrième motif peut être balayée selon un sens de parcours opposé au sens de parcours des lignes adjacentes du quatrième motif.

De préférence, la densité d'énergie volumique lors du balayage selon le troisième motif et/ou selon quatrième motif est comprise entre 0,5 J/mm$^3$ et 3 J/mm$^3$.

De préférence, à l'étape b), le temps de latence entre le début du balayage selon le deuxième motif et le début du balayage selon le troisième motif est compris entre 0,1 et 3 s et/ou le temps de latence entre le début du balayage selon le troisième motif et le début du balayage selon le quatrième motif est compris entre 0,1 et 3 s.

Lors de l'étape b), la puissance du rayonnement laser peut être comprise entre 20 W et 500 W et/ou le diamètre du faisceau laser peut être compris entre 50 $\mu$m et 150 $\mu$m et/ou la vitesse de balayage du faisceau laser peut être comprise entre 20 mm/s et 2000 mm/s, de préférence entre 50 mm/s et 1500mm/s , de préférence entre 100 mm/s et 1000 mm/s.

Le diamètre d'un faisceau laser peut être déterminé à 1/e$^2$ en intensité, c'est-à-dire que le diamètre d'un faisceau laser peut correspondre à deux fois la distance radiale entre le centre du faisceau laser, c'est-à-dire le point où l'intensité lumineuse est maximale, et le point où l'intensité lumineuse est égale à 1/e$^2$ fois l'intensité maximale, e étant le nombre d'Euler.

L'aire de la portion balayée à l'étape b) peut être comprise entre 0,25 cm$^2$ et 16 cm$^2$. La portion balayée peut avoir la forme d'un rectangle de longueur comprise entre 5 mm et 40 mm, de préférence entre 8 mm et 20 mm, et de largeur comprise entre 5 mm et 40 mm, de préférence entre 8 mm et 20 mm.

Le procédé peut en outre comporter la mise en oeuvre de l'étape b) sur une autre portion du lit, de préférence sur plusieurs portions du lit agencées côte à côte de manière à former un damier. Ainsi, l'apport progressif de chaleur sur chacune des portions du lit peut être contrôlé de manière optimale. La mise en oeuvre de l'étape b) sur les différentes portions du lit peut être réalisée en suivant des premier et deuxième motifs différents sur chaque portion et/ou, le cas échéant, selon des troisième et quatrième motifs différents, et/ou selon des paramètres du faisceau laser différents l'une de l'autre. Une pièce poreuse présentant des variations de tailles des pores et/ou une variation de la porosité peut ainsi être fabriquée. Notamment, la pièce peut présenter un gradient de porosité. Les paramètres du faisceau laser peuvent être la puissance de rayonnement, le diamètre du faisceau laser et/ou la vitesse de balayage du faisceau laser, de préférence la puissance de rayonnement et la vitesse de balayage du faisceau laser.

L'invention concerne également une pièce métallique comportant des pores répartis aléatoirement sur l'ensemble de la pièce, et présentant un rapport du taux de porosité fermée sur le taux de porosité ouverte inférieur à 0,1, de préférence inférieur à 0,05, de préférence encore inférieur à 0,02, le taux de porosité ouverte étant compris entre 20% et 65%, la pièce présentant une distribution en nombre des tailles des pores dans laquelle :

5% à 30% des pores ont une taille inférieure à M * 0,2 ;
33% à 60% des pores ont une taille inférieure à M * 0,4 ;
66% à 80% des pores ont une taille inférieure à M * 0,6 ;
80% à 100% des pores ont une taille inférieure à M * 0,8 ; et
90% à 100% des pores ont une taille inférieure à M,
M étant compris entre 250 $\mu$m et 900 $\mu$m, de préférence entre 350 $\mu$m et 500 $\mu$m.

Les pores sont répartis irrégulièrement sur l'ensemble de la pièce. La pièce poreuse selon l'invention diffère donc des structures poreuses à treillis de l'art antérieur dans lesquelles les treillis sont répétés de manière ordonnée dans la structure.

Le taux de porosité fermée est le rapport du volume total occupé par les pores fermés sur le volume occupé par la pièce poreuse. Un pore fermé est isolé fluidiquement des autres pores. Aucun fluide ne peut pénétrer dans un pore fermé. Le taux de porosité fermée est mesuré par pycnométrie, par exemple pycnométrie hélium, ou par poussée d'Archimède.

Le taux de porosité ouverte est le rapport du volume total occupé par les pores ouverts sur le volume occupé par la pièce poreuse. Les pores ouverts sont en communication de fluide entre eux. Par exemple, le taux de porosité ouverte peut être déterminé par mise en contact, par exemple l'immersion, de la pièce poreuse avec un liquide, par exemple l'éthanol, puis mesure de la masse du liquide absorbée par la structure.

De préférence, les pores présentent une taille moyenne $T_m$ comprise entre 100 $\mu$m et 300 $\mu$m. La taille moyenne $T_m$ des pores est la moyenne arithmétique en nombre des tailles des pores.

La taille d'un pore peut être déterminée par la méthode suivante. La portion poreuse peut d'abord être infiltrée avec une résine. Une tranche à analyser est découpée puis polie afin d'obtenir un bon état de surface, ledit polissage étant effectué avec un papier de polissage aux grains de faible taille au minimum de grade 1200, de préférence avec une pâte diamantée. Des clichés de la tranche polie sont réalisés à l'aide d'un microscope optique ou d'un microscope électronique, par exemple un microscope électronique à balayage, de préférence dans un mode utilisant les électrons rétrodiffusés afin d'obtenir un très bon contraste entre la phase métallique et la résine. Le grandissement utilisé est tel que la largeur de l'image soit comprise entre 10 fois et 50 fois la taille moyenne des pores. Un premier cliché peut être réalisé grâce à une estimation visuelle de la taille moyenne des pores. La taille d'un pore est déterminée par analyse des clichés selon une méthode de seuillage suivie par une érosion/dilatation puis d'une segmentation Watershed utilisée par exemple par un logiciel d'analyse d'image tel que le logiciel ZEN CORE 2© commercialisé par la société Zeiss© ou le logiciel ImageJ (https://imagej.nih.gov/ij/). La taille de chaque pore est alors exprimée à partir du diamètre $\varphi$ défini comme suit :

[Math 2]

$$\varphi = \sqrt{\frac{4 * A_{pore}}{\pi}}$$

$A_{pore}$ étant l'aire de chaque pore exprimé en $\mu$m$^2$.

De façon alternative, la taille moyenne des pores peut être mesurée par tomographie, par exemple aux rayons X.

De préférence, la pièce est en un métal tel que décrit précédemment.

De préférence, la pièce est fabriquée par le procédé selon l'invention.

De préférence, M est égal au diamètre équivalent médian $D_{50}$ de la poudre.

L'invention concerne également un échangeur de chaleur ou un réacteur, de préférence un caloduc, comportant, voire consistant en, la pièce selon l'invention.

## Brève description des dessins

D'autres avantages et caractéristiques ressortiront à la lecture de la description détaillée, des exemples présentés à titre illustratif et non limitatif, et du dessin annexé dans lequel:

[Fig 1A] est une vue schématique représentant un exemple de mise en oeuvre de l'étape a) de formation d'un lit de particules métalliques ;

[Fig 1B] est une vue schématique représentant un exemple de mise en oeuvre de l'étape b) de liaison de particules entre elles ;

[Fig 2A] et [Fig 2B] sont des vues schématiques du dessus d'un balayage d'une portion d'un lit de particules par un faisceau laser selon un trajet suivant un premier motif ;

[Fig 3] est un agrandissement de la vue du dessus du balayage de particules selon la figure 2A ou la figure 2B ;

[Fig 4A] et [Fig 4B] sont des vues schématiques du dessus d'un balayage d'une portion d'un lit de particules par un faisceau laser selon un trajet suivant un deuxième motif ;

[Fig 5] est un agrandissement de la vue du dessus du balayage des particules selon la figure 4A ou la figure 4B ;

[Fig 6] est une vue schématique du dessus d'un balayage d'une portion d'un lit de particules par un faisceau laser selon un trajet suivant un troisième motif ;

[Fig 7] est une vue schématique du dessus d'un balayage d'une portion d'un lit de particules par un faisceau laser selon un trajet suivant un quatrième motif ;

[Fig 8] est une photographie en perspective d'un exemple de pièce poreuse fabriquée par le procédé selon l'invention ;

[Fig 9] est une courbe représentant la prise de masse par ascension capillaire de l'éthanol dans la pièce selon la figure 8 au cours du temps ; et

[Fig 10] est un cliché pris en microscopie optique d'une tranche d'une pièce poreuse fabriquée par le procédé selon l'invention, la tranche étant découpée puis polie après infiltration de la pièce poreuse par une résine.

## Description détaillée

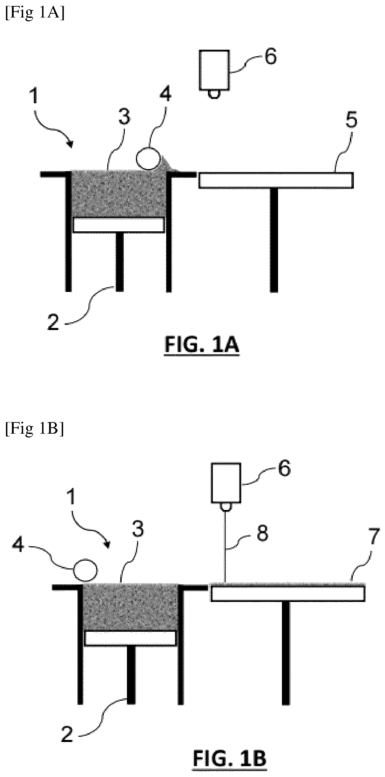

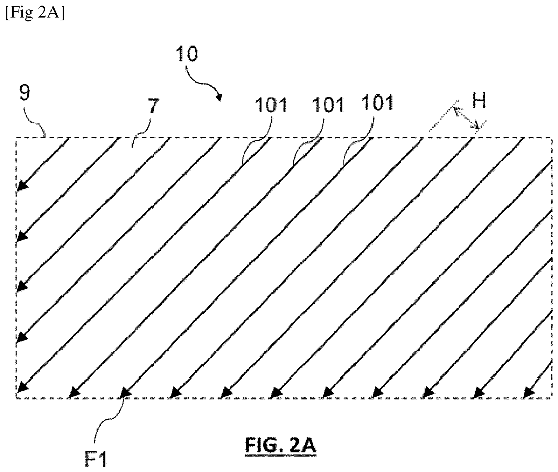

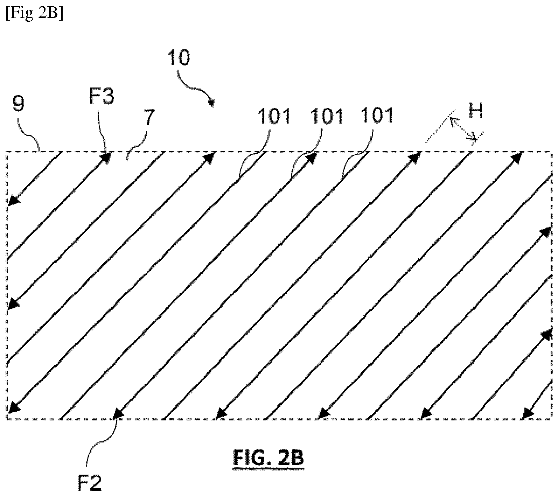

On a illustré aux figures 1A et 1B un dispositif pour la mise en oeuvre du procédé selon l'invention. Le dispositif comprend un système d'étalement 1 comprenant un piston d'alimentation 2, supportant un tas de poudre 3, et un rouleau 4 agencé au-dessus du tas de poudre 3. Le dispositif comprend également une source laser 6 et un plateau 5.
La figure 1A illustre un exemple de mise en oeuvre de l'étape a) du procédé durant laquelle un lit 7 de particules métalliques est formé sur le plateau 5 à partir de la poudre 3, la poudre 3 présentant un diamètre équivalent médian $D_{10}$ supérieur à 250 $\mu$m et un $D_{90}$ inférieur à 1200 $\mu$m. Dans l'exemple illustré, l'étape a) comprend le soulèvement du tas de poudre 3 par le piston d'alimentation 2 jusqu'à la hauteur du rouleau 4, suivi par la mise en mouvement du rouleau 4 de sorte à racler la partie haute du tas de poudre 3 jusqu'à venir étaler les particules de la poudre 3 sur le plateau 5 et ainsi former un lit 7 de particules d'épaisseur comprise entre 400 $\mu$m et 1400 $\mu$m.
La figure 1B illustre la mise en oeuvre d'une étape b) durant laquelle la source laser 6 émet un faisceau laser 8 qui balaye une portion du lit de particules formé à l'étape a).
Par exemple, pour former une pièce faite de particules en un acier inoxydable, le faisceau laser 8 a un diamètre de 70 $\mu$m et la vitesse de balayage du faisceau laser 8 est de 558 mm/s. Avec un tel diamètre et une telle vitesse de balayage, l'apport d'énergie sur le lit de poudre par le faisceau laser 8 est localisé. Cela permet, dans la zone irradiée, aux particules de fondre partiellement pour se lier à leurs voisines.
On a illustré aux figures 2A et 2B deux modes différents de balayage d'une portion 9 du lit 7 de particules par le faisceau laser 8 selon un trajet suivant un premier motif 10. Le premier motif 10 est composé de lignes 101 rectilignes, parallèles entre elles et espacées les unes des autres d'un écart-vecteur H. Dans l'exemple illustré par la figure 2A, chacune des lignes 101 est parcourue par le faisceau laser 8 selon un même sens de parcours indiqué par la flèche F1. Dans l'exemple illustré par la figure 2B, chacune des lignes 101 du premier motif 10 est parcourue par le faisceau laser 8 selon un sens de parcours opposé au sens de parcours des lignes 101 adjacentes, comme indiqué par les flèches F2 et F3.

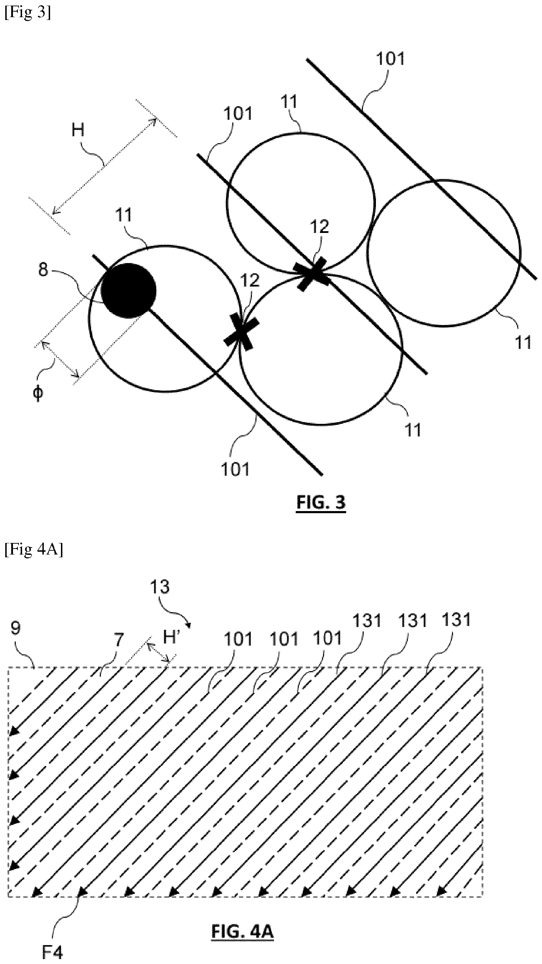

On a représenté sur la figure 3 une vue agrandie d'un balayage selon la figure 2A ou 2B.

Le faisceau laser présente un diamètre $\phi$ inférieur au diamètre équivalent médian $D_{50}$ de la poudre. Ainsi, lors du balayage selon une ligne 101 du premier motif 10, l'énergie du faisceau laser est concentrée seulement sur une partie des particules le long de la ligne 101.

En outre, dans cet exemple, l'écart-vecteur H, qui selon l'invention est compris entre 0,5 $^*D_{50}$ et 3,0$^* D_{50}$ est sensiblement égal au diamètre équivalent de la poudre.

Par exemple, pour fabriquer une pièce à partir de particules en acier inoxydable ayant un diamètre équivalent médian de 500 $\mu$m, le faisceau laser 8 ayant un diamètre de 70 $\mu$m peut parcourir un premier motif 10 dont les lignes 101 mesurent 10 mm de long avec une vitesse de balayage de 558 mm/s, et avec un écart-vecteur H d'environ 400 $\mu$m. Ainsi, le balayage par le faisceau laser 8 d'une ligne 101 échauffe faiblement, voire pas, les particules qui ont déjà subi une irradiation par le faisceau laser et qui sont disposées le long des autres lignes 101 du premier motif 10.

Lors du balayage de particules 11 par le faisceau laser 8 suivant une ligne 101 du premier motif 10, l'énergie apportée par le faisceau laser 8 chauffe lesdites particules 11. Ainsi, lorsque le faisceau laser 8 balayant suivant une ligne 101 passe sur ou à proximité de surfaces de deux particules 11 en contact, les particules coalescent, par exemple sous l'effet de leur fusion partielle, et deviennent liées l'une à l'autre. Il y a alors la formation d'un cou de liaison 12 entre lesdites particules 11.

Bien que le balayage selon le premier motif 10 lie les particules 11 entre elles, les inventeurs ont constaté qu'un balayage de la portion 9 par le faisceau laser 8 selon un trajet suivant un deuxième motif 13 est nécessaire pour former une pièce présentant une résistance mécanique suffisante.

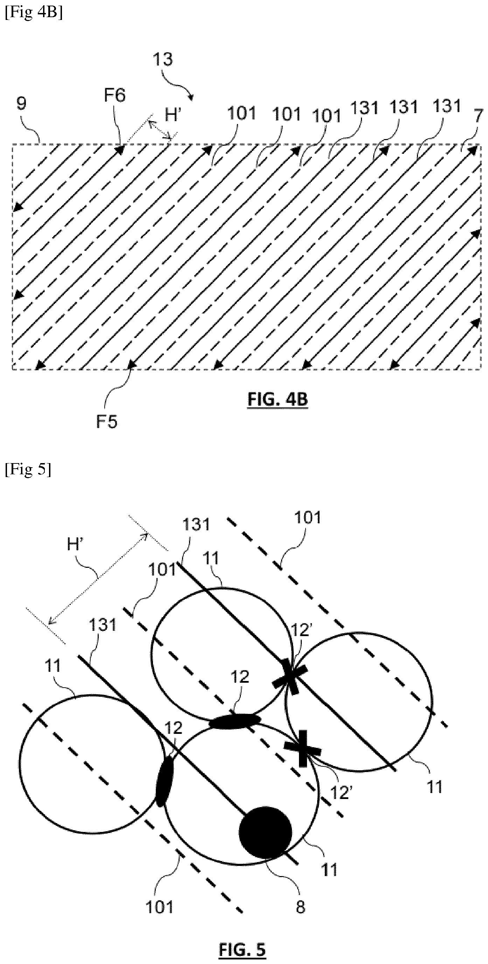

On a illustré aux figures 4A et 4B deux modes de réalisation différents d'un balayage suivant le deuxième motif 13. Dans chacun des modes de balayage, le deuxième motif 13 est composé de lignes 131 rectilignes, parallèles entre elles et aux lignes 101 du premier motif 10. Les lignes 131 sont espacées les unes des autres d'un écart-vecteur H' égal à l'écart-vecteur H du premier motif 10. Les lignes 131 sont entrelacées avec les lignes 101 de sorte que chaque ligne 131 est espacée d'une ligne 101 adjacente d'une distance égale à H/2.

Dans le mode de balayage illustré par la figure 4A, chacune des lignes 131 est parcourue par le faisceau laser 8 selon un même sens de parcours indiqué par la flèche F4. Dans le mode de balayage illustré par la figure 4B, chacune des lignes 131 est parcourue par le faisceau laser 8 selon un sens de parcours opposé au sens de parcours des lignes 131 adjacentes, comme indiqué par les flèches F5 et F6.

On a représenté à la figure 5 une vue rapprochée d'un balayage selon la figure 4A ou 4B. Lors du balayage de particules 11 par le faisceau laser 8 suivant une ligne 131 du deuxième motif 13, l'énergie lumineuse apportée par le faisceau laser 8 chauffe lesdites particules 11. Ainsi, lorsque le faisceau laser 8 balayant suivant une ligne 131 passe à proximité d'un cou de liaison 12 formé lors du balayage suivant le premier motif 10, alors l'échauffement renforce ledit cou 12, par exemple par fusion partielle des deux particules 11 liées par ledit cou 12. De manière similaire au balayage selon le premier motif 10, lorsque le faisceau laser 8 balayant suivant une ligne 131 passe sur ou à proximité de surfaces de deux particules 11 en contact entre elles, ces particules 11 coalescent et forment un nouveau cou de liaison 12'. Par ailleurs, lors du balayage suivant le deuxième motif 13, la formation et le renforcement de cous de liaison 12, 12' sont facilités par l'accumulation de chaleur générée par le balayage suivant le premier motif 10.

Pour augmenter encore la résistance de la pièce, un balayage de la portion 9 du lit 7 par le faisceau laser 8 selon un trajet suivant un troisième motif 14 et un quatrième motif 15 peuvent être mis en oeuvre.

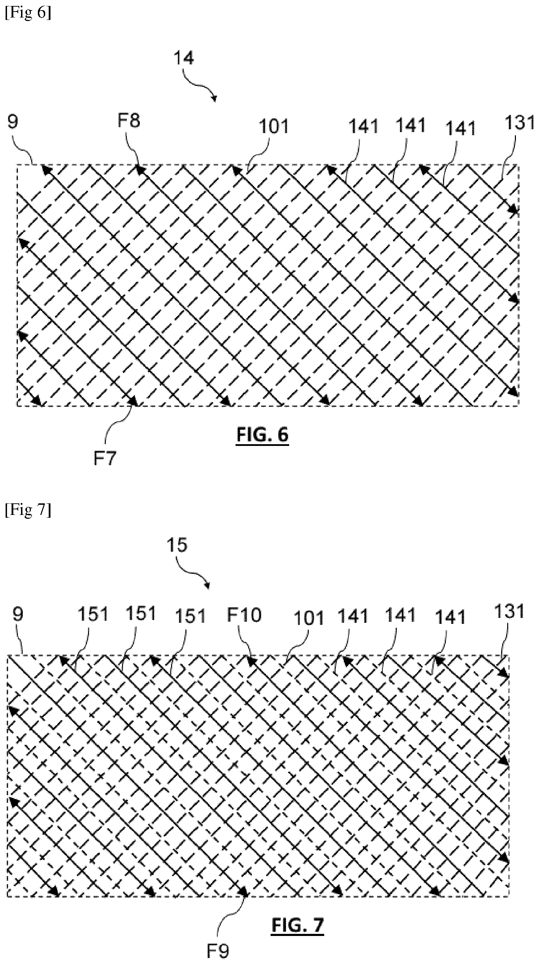

On a illustré sur la figure 6 un exemple de balayage de la portion 9 par le faisceau laser 8 selon un trajet suivant un troisième motif 14. Le troisième motif 14 est composé de lignes 141 rectilignes, parallèles entre elles et espacées les unes des autres. De préférence, l'écart-vecteur entre deux lignes 141 adjacentes est le même que l'écart-vecteur H entre deux lignes 101. Les lignes 141 sont perpendiculaires aux lignes 101 du premier motif 10. Par exemple, chacune des lignes 141 est parcourue par le faisceau laser 8 selon un sens de parcours opposé au sens de parcours des lignes 141 adjacentes, comme indiqué par les flèches F7 et F8.

La formation de liaisons entre les particules 11 durant le balayage laser suivant le troisième motif 14 s'opère selon des phénomènes physiques similaires à ceux décrits à la figure 5. La formation est toutefois facilitée par l'accumulation de chaleur générée par le balayage suivant le premier motif 10 puis suivant le deuxième motif 13.

On a illustré à la figure 7 un mode de réalisation du balayage de la portion 9 par le faisceau laser 8 selon un trajet suivant un quatrième motif 15. Le quatrième motif 15 est composé de lignes 151 rectilignes, parallèles entre elles et espacées les unes des autres. De préférence, l'écart-vecteur entre deux lignes 151 adjacentes est le même que l'écart-vecteur H' entre deux lignes 131. Les lignes 151 sont parallèles et sont entrelacées avec les lignes 141 du troisième motif 14. Dans le mode de balayage illustré par la figure 7, chacune des lignes 151 est parcourue par le faisceau laser 8 selon un sens de parcours opposé au sens de parcours des lignes 151 adjacentes, comme indiqué par les flèches F9 et F10.

La formation de liaisons entre les particules 11 durant le balayage laser suivant le quatrième motif 15 s'opère selon des phénomènes physiques similaires à ceux décrits à la figure 5 excepté que la formation est facilitée par l'accumulation de chaleur générée par le balayage suivant le premier motif 10, le deuxième motif 13, puis suivant le troisième motif 14.

Bien entendu l'étape b) décrite précédemment peut être réitérée sur une autre portion du lit de particules, notamment adjacente, par exemple en fonction de la forme et/ou de la distribution de la porosité de la pièce souhaitée.

Les étapes a) et b) forment un cycle permettant la formation d'une couche de la pièce à fabriquer. Ce cycle est répété de sorte à obtenir la pièce poreuse par fabrication additive.

Exemple 1

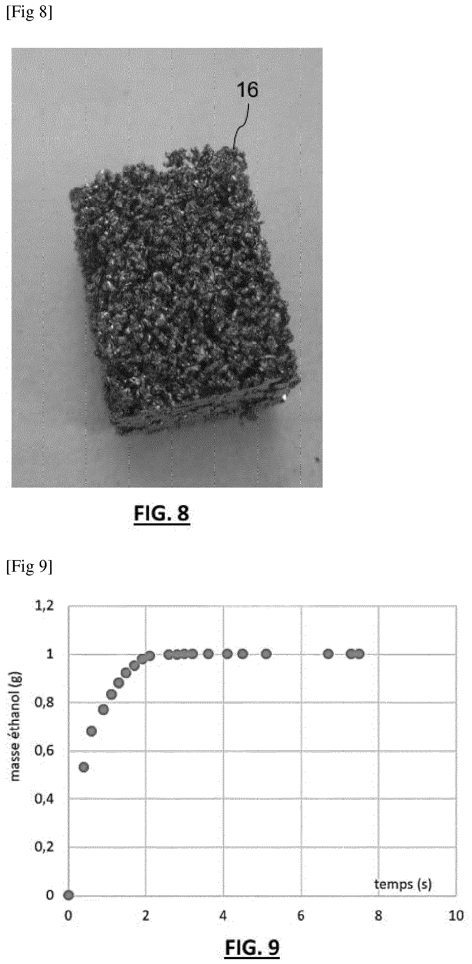

A titre illustratif, les inventeurs ont mis en oeuvre le procédé selon l'invention pour la réalisation d'une pièce 16 poreuse telle que photographiée sur la figure 8. La pièce 16 est un pavé droit ayant une base carrée de 10 mm de côté et une hauteur de 12 mm. Comme cela est observé, la pièce présente de nombreux interstices formant des pores dans la matrice métallique.

Le procédé de fabrication a été mis en oeuvre avec une source d'émission laser à fibre Yb continu de longueur d'onde de 1070 nm émettant un faisceau laser 8 avec une puissance de rayonnement de 268 W et un diamètre de 90 $\mu$m. La vitesse de balayage du faisceau laser 8 était de 638 mm/s. L'écart-vecteur H pour chacun des premier 10, deuxième 13, troisième 14 et quatrième 15 motifs était égal à 700 $\mu$m. Les premier 10, deuxième 13, troisième 14 et quatrième 15 motifs étaient similaires à ceux illustrés par les figures 2B, 4B, 6 et 7, respectivement. La densité d'énergie volumique lors du balayage selon chacun des premier 10, deuxième 13, troisième 14 et quatrième 15 motifs était de 0,75 J/mm$^3$.

La poudre utilisée pour la fabrication de la pièce 16 était une poudre de particules en acier inoxydable 316L atomisée à l'eau, la poudre ayant un percentile dix $D_{10}$ de 350,8 $\mu$m, un diamètre équivalent médian $D_{50}$ de 546,9 $\mu$m et un percentile quatre-vingt-dix $D_{90}$ de 844,7 $\mu$m. L'épaisseur du lit de poudre 7 formé à chaque cycle était de 800 $\mu$m.

Différents tests ont été effectués pour évaluer les performances capillaires de la pièce 16 obtenue. La figure 9 représente la prise de masse lors de l'ascension capillaire de l'éthanol dans la pièce 16. Il peut être observé qu'après 2 s, 1 g d'éthanol a ascensionné par capillarité dans les pores de la pièce 16.

Les inventeurs ont mesuré un taux de porosité ouverte de 56 % et un taux de porosité fermée sensiblement égal à 0 %. Ils ont également mesuré une performance capillaire :

[Math 3]

$$\frac{K}{R_c} = 1,9 \ \mu m$$

où, K est la perméabilité de la pièce 16 et $R_c$ est le rayon capillaire effectif moyen des pores défini comme :

[Math 4]

$$R_c = \frac{T_m}{2 * cos\theta}$$

avec $T_m$ la taille moyenne des pores et $\theta$ l'angle de contact entre le fluide pour l'ascension capillaire et la pièce 16.

La performance capillaire de la pièce 16 est supérieure à la performance capillaire des structures poreuses en treillis de l'art antérieur, par exemple l'article D. Jafari et al., Applied Thermal Engineering, vol. 143, 2018, pages 403-314, doi:10.1016/j.applthermaleng.2018.07.111 décrit l'obtention d'une structure poreuse en treillis avec une performance capillaire égale à 1,04 $\mu$m.

Exemple 2

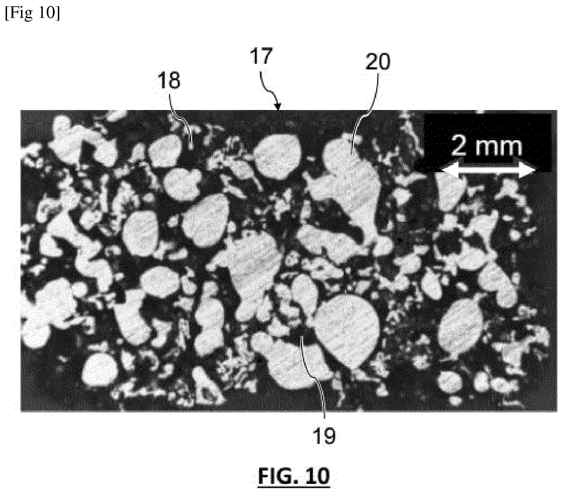

Dans un autre exemple de réalisation, le procédé selon l'invention a été mis en oeuvre pour la réalisation d'une pièce poreuse 17 sous la forme d'un pavé droit avec une longueur de 10 mm, une largeur de 5 mm et une hauteur de 7 mm. La vue en coupe polié de ladite pièce 17 est illustrée figure 10.

Le procédé de fabrication a été mis en oeuvre avec une source d'émission laser à fibre Yb continu de longueur d'onde de 1070 nm émettant un faisceau laser 8 avec une puissance de rayonnement de 216 W et un diamètre de 90

μm. La vitesse de balayage du faisceau laser 8 était de 450 mm/s.

L'écart-vecteur H pour chacun des premier 10, deuxième 13, troisième 14 et quatrième 15 motifs était égal à 700 μm. Les premier 10, deuxième 13, troisième 14 et quatrième 15 motifs étaient similaires à ceux illustrés par les figures 2B, 4B, 6 et 7, respectivement. La densité d'énergie volumique lors du balayage selon chacun des premier 10, deuxième 13, troisième 14 et quatrième 15 motifs était de 0,85 J/mm$^3$.

La poudre utilisée pour la fabrication de cette pièce 17 est la même que la poudre utilisée pour la fabrication de la pièce 16 de l'exemple 1. L'épaisseur du lit de poudre 7 formé à chaque cycle était de 800 μm.

La pièce 17 obtenue présente un taux de porosité ouverte de 46 % et un taux de porosité fermée sensiblement égal à 0 %. Comme cela peut être observé sur la figure 10, la pièce 17 comporte des particules 18 de la poudre liées entre elles par des cous de liaison et séparées par des pores 19. Elle comporte en outre des agglomérats fondus 20 résultant de la fusion complète de particules et qui présentent une taille supérieure à 1 mm.

La distribution en nombre des diamètres équivalents des pores 19 de la pièce 17 est telle que

- 16% des pores 19 ont un diamètre équivalent inférieur à 110 μm,
- 48% des pores 19 ont un diamètre équivalent inférieur à 220 μm,
- 79% des pores 19 ont un diamètre équivalent inférieur à 330 μm,
- 91% des pores 19 ont un diamètre équivalent inférieur à 440 μm,
- 95% des pores 19 ont un diamètre équivalent inférieur à 550 μm.

Une telle distribution de la porosité est particulièrement bien adaptée au transfert fluidique.

D'autres variantes et améliorations peuvent être envisagées sans pour autant sortir du cadre de l'invention tel que défini par les revendications ci-après.

Par exemple, les particules métalliques peuvent comporter un coeur en un premier matériau métallique recouvert partiellement ou intégralement par une couche d'un deuxième matériau métallique. Le deuxième matériau métallique peut présenter une température de fusion inférieure à la température de fusion du premier matériau métallique. Ainsi, la pièce peut être formée par fusion du deuxième matériau de sorte que les particules de la poudre forment des liaisons entre elles sans que le coeur des particules ne fonde. La tenue mécanique de la pièce ainsi formée est alors en partie assurée par les cous entre les particules générées par la fusion du deuxième matériau. De façon alternative, le deuxième matériau métallique peut être un catalyseur d'une réaction chimique ou un promoteur d'un changement de phase d'un fluide d'échange destiné circuler dans la portion poreuse, par exemple choisi parmi le platine, le cobalt, le nickel, le ruthénium et leurs alliages.

## Revendications

1. Procédé de fabrication additive d'une pièce poreuse (16), le procédé comprenant la répétition d'un cycle comportant les étapes de :

   a) formation d'un lit (7) de particules métalliques à partir d'une poudre (3) desdites particules (11), le percentile dix ($D_{10}$) du diamètre équivalent des particules de la poudre étant supérieur à 250 μm,
   b) liaison des particules entre elles par balayage d'au moins une portion (9) du lit avec un faisceau laser (8) selon un trajet suivant un premier motif (10) puis un deuxième motif (13) qui sont chacun formés de lignes (101, 131) parallèles et écartées les unes des autres, les premier et deuxième motifs étant entrelacés ou identiques,

   le faisceau laser présentant un diamètre ($\phi$) inférieur au diamètre équivalent médian ($D_{50}$) de la poudre, le rapport de l'écart-vecteur (H) du premier motif sur le diamètre équivalent médian de la poudre et le rapport de l'écart-vecteur (H') du deuxième motif sur le diamètre équivalent médian de la poudre étant chacun compris entre 0,5 et 3,0.

2. Procédé selon la revendication 1, le rapport du diamètre du faisceau laser sur le diamètre équivalent médian de la poudre étant inférieur à 0,5, de préférence inférieur à 0,3, mieux inférieur à 0,2.

3. Procédé selon l'une quelconque des revendications 1 et 2, le rapport de l'écart-vecteur du premier motif sur le diamètre équivalent médian de la poudre et le rapport de l'écart-vecteur du deuxième motif sur le diamètre équivalent médian de la poudre étant chacun compris entre 0,6 et 2,0.

4. Procédé selon l'une quelconque des revendications précédentes, l'écart-vecteur du premier motif étant égal à l'écart-vecteur du deuxième motif.

**5.** Procédé selon la revendication précédente, le lit formé à l'étape a) ayant une épaisseur comprise entre 400 et 1400 $\mu$m.

**6.** Procédé selon l'une quelconque des revendications précédentes, chacune des lignes du deuxième motif étant équidistante de deux lignes adjacentes du premier motif.

**7.** Procédé selon l'une quelconque des revendications précédentes, selon lequel le temps de latence entre le début du balayage selon le premier motif et le début du balayage selon le deuxième motif est compris entre 0,1 et 3 s.

**8.** Procédé selon l'une quelconque des revendications précédentes, comportant postérieurement au balayage selon le deuxième motif, un balayage de la portion du lit par un faisceau laser (8) selon un trajet suivant un troisième motif (14) puis un quatrième motif (15) qui sont chacun formés de lignes (141, 151) sensiblement parallèles, écartées les unes des autres et formant un angle compris entre 60° et 120°, de préférence entre 75° et 105°, de préférence encore entre 85° et 95°, voire perpendiculaire, avec les lignes du premier motif, les troisième et quatrième motifs étant entrelacés ou identiques.

**9.** Procédé selon l'une quelconque des revendications précédentes, les particules de la poudre comportant au moins un métal pour plus de 90,0 % de leur masse, de préférence plus de 95,0 %, de préférence le métal étant choisi parmi l'aluminium, le cuivre, le nickel, le fer et un alliage comportant plus de 50 % en masse d'un métal choisi parmi l'aluminium, le cuivre, le nickel et le fer, par exemple un acier inoxydable.

**10.** Procédé selon l'une quelconque des revendications précédentes, et notamment selon la revendication 9, la densité d'énergie volumique lors du balayage selon le premier motif et/ou selon le deuxième motif, et/ou le cas échéant selon le troisième motif et/ou le quatrième motif, étant comprise entre 0,5 J/mm$^3$ et 3,0 J/mm$^3$.

**11.** Procédé selon l'une quelconque des revendications précédentes, l'aire de la portion balayée à l'étape b) étant comprise entre 0,25 et 16 cm$^2$, et/ou la portion balayée ayant la forme d'un rectangle de longueur comprise entre 5 mm et 40 mm, de préférence entre 8 mm et 20 mm, et de largeur comprise entre 5 mm et 40 mm, de préférence entre 8 mm et 20 mm.

**12.** Procédé selon l'une quelconque des revendications précédentes, lors de l'étape b), la puissance du rayonnement laser étant comprise entre 20 W et 500 W, et/ou le diamètre du faisceau laser étant compris entre 50 $\mu$m et 150 $\mu$m, et/ou la vitesse de balayage du faisceau laser étant comprise entre 20 mm/s et 2000 mm/s, de préférence entre 50 mm/s et 1500 mm/s, de préférence entre 100 mm/s et 1000 mm/s.

**13.** Pièce métallique (16) comportant des pores (19) répartis aléatoirement sur l'ensemble de la pièce, et présentant un rapport du taux de porosité fermée sur le taux de porosité ouverte inférieur à 0,1, de préférence inférieur à 0,05, de préférence encore inférieur à 0,02, le taux de porosité ouverte étant compris entre 20% et 65%, la pièce présentant en outre la distribution en nombre des tailles de pores suivante :

- 5% à 30% des pores ont un diamètre équivalent inférieur à M * 0,2 ;
- 33% à 60% des pores ont un diamètre équivalent inférieur à M * 0,4 ;
- 66% à 80% des pores ont un diamètre équivalent inférieur à M * 0,6 ;
- 80% à 100% des pores ont un diamètre équivalent inférieur à M * 0,8 ; et
- 90% à 100% des pores ont un diamètre équivalent inférieur à M,

M étant compris entre 250 $\mu$m et 900 $\mu$m, de préférence entre 350 $\mu$m et 500 $\mu$m.

**14.** Pièce selon la revendication précédente, fabriquée par le procédé selon l'une des revendications 1 à 12, M étant de préférence égal au diamètre équivalent médian ($D_{50}$) de la poudre.

**15.** Echangeur de chaleur ou réacteur, de préférence un caloduc, comportant une pièce selon l'une quelconque des revendications 13 et 14.

[Fig 1A]

FIG. 1A

[Fig 1B]

FIG. 1B

[Fig 2A]

**FIG. 2A**

[Fig 2B]

**FIG. 2B**

[Fig 3]

**FIG. 3**

[Fig 4A]

**FIG. 4A**

[Fig 4B]

**FIG. 4B**

[Fig 5]

**FIG. 5**

[Fig 6]

**FIG. 6**

[Fig 7]

**FIG. 7**

[Fig 8]

FIG. 8

[Fig 9]

FIG. 9

[Fig 10]

FIG. 10

Europäisches
Patentamt

European
Patent Office

Office européen
des brevets

# RAPPORT DE RECHERCHE EUROPEENNE

Numéro de la demande

EP 23 16 9263

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2019/299290 A1 (KUHNS MATTHEW [US] ET AL) 3 octobre 2019 (2019-10-03) * alinéas [0038], [0048], [0050], [0053] – [0063], [0093], [0094], [0111] * * revendication 1 * * figures 1,2,5,7 * ----- | 1-15 | INV. B22F10/28 B22F3/11 B22F5/10 B22F10/36 B22F10/38 F28F21/08 F28D15/04 B33Y10/00 B33Y50/02 B33Y80/00 F28F13/00 |
| T | KING W E ET AL: "Laser powder bed fusion additive manufacturing of metals; physics, computational, and materials challenges", APPLIED PHYSICS REVIEWS, AMERICAN INSTITUTE OF PHYSICS, 2 HUNTINGTON QUADRANGLE, MELVILLE, NY 11747, vol. 2, no. 4, 29 décembre 2015 (2015-12-29), XP012204143, DOI: 10.1063/1.4937809 * page 13 * ----- | | |
| X | US 5 625 861 A (NISHI TAKASHI [JP] ET AL) 29 avril 1997 (1997-04-29) * exemple 14 * ----- | 13-15 | DOMAINES TECHNIQUES RECHERCHES (IPC) B22F F28F F28D B33Y |

Le présent rapport a été établi pour toutes les revendications

| Lieu de la recherche | Date d'achèvement de la recherche | Examinateur |
|---|---|---|
| La Haye | 31 août 2023 | Järvi, Tommi |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

**EP 4 265 358 A1**

## ANNEXE AU RAPPORT DE RECHERCHE EUROPEENNE
## RELATIF A LA DEMANDE DE BREVET EUROPEEN NO.

EP 23 16 9263

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-08-2023

| Document brevet cité au rapport de recherche | Date de publication | Membre(s) de la famille de brevet(s) | Date de publication |
|---|---|---|---|
| US 2019299290 A1 | 03-10-2019 | AUCUN | |
| US 5625861 A | 29-04-1997 | CA 2160857 A1 | 21-04-1996 |
| | | DE 69522774 T2 | 04-07-2002 |
| | | EP 0707910 A2 | 24-04-1996 |
| | | US 5625861 A | 29-04-1997 |

Pour tout renseignement concernant cette annexe : voir Journal Officiel de l'Office européen des brevets, No.12/82

**EP 4 265 358 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3279597 A1

- FR 2010978

**Littérature non-brevet citée dans la description**

- **D. JAFARI et al.** *Applied Thermal Engineering,* 2018, vol. 143, 403-314

- **M. AMELI et al.** *Applied Thermal Engineering,* 2013, vol. 52, 498-504